# EUROPÄISCHE PATENTSCHRIFT

(11) **EP 2 413 107 B1**
(45) Veröffentlichungstag und Bekanntmachung des Hinweises auf die Patenterteilung: **08.04.2020**
(21) Anmeldenummer: 11006111.6
(22) Anmeldetag: 26.07.2011
(51) Int. Cl.: G01F 1/58

(54) **Magnetisch-induktives Durchflussmessgerät**
Magnetic-inductive flow measuring apparatus
Débitmètre à induction magnétique

(30) Priorität: 26.07.2010 DE 102010032270
(43) Veröffentlichungstag der Anmeldung: 01.02.2012
(73) Patentinhaber: Krohne AG, 4019 Basel (CH)
(72) Erfinder: Neuburger, Stefan, 55271 Stadecken-Elsheim (DE); Neven, Josef, 26540 Mours St. Eusèbe (FR)
(74) Vertreter: Gesthuysen Patent- und Rechtsanwälte

(56) Entgegenhaltungen:
- DE-A1- 3 223 028
- DE-A1- 3 917 975
- DE-A1- 3 925 509
- DE-A1- 4 302 158
- DE-A1- 19 708 857
- DE-A1-102004 063 617
- DE-B- 1 177 835
- GB-A- 2 238 349

## Beschreibung

Die Erfindung betrifft ein magnetisch-induktives Durchflussmessgerät mit einem Messrohr, mit mindestens einer Magneteinrichtung und mindestens zwei Elektroden, wobei das Messrohr ein Messrohrquerschnitt aufweist, aus einem Metall besteht und eine elektrisch isolierende Innenbeschichtung aufweist, wobei das Messrohr einen Einlaufabschnitt und einen Auslaufabschnitt aufweist, wobei der Einlaufabschnitt und der Auslaufabschnitt des Messrohrs einen Anschlussquerschnitt aufweisen, wobei das Messrohr zwischen dem Einlaufabschnitt und dem Auslaufabschnitt aufgeweitet ist, so dass ein Rücksprung gegenüber dem Anschlussquerschnitt ausgebildet ist, wobei die Elektroden im Rücksprung angeordnet sind, wobei die Innenbeschichtung im Rücksprung auf das Messrohr aufgebracht ist, und wobei die Schichtdicke der Innenbeschichtung der Höhe des Rücksprungs entspricht, so dass der resultierende Querschnitt im Bereich des Rücksprungs dem Anschlussquerschnitt entspricht und ein Messrohr mit nahezu konstantem resultierenden Messrohrquerschnitt ausgebildet ist.

Das Messprinzip magnetisch-induktiver Durchflussmessgeräte beruht auf der Trennung bewegter Ladungen in einem Magnetfeld. Die messtechnische Grundlage bildet ein Messrohr aus einem nicht magnetischen Werkstoff, beispielsweise aus einem nicht magnetischen Metall, das auf der Strömungsseite durch eine isolierende Auskleidung elektrisch von dem Messfluid isoliert ist und das von einem durch die Magneteinrichtung - beispielsweise durch Spulen - erzeugten Magnetfeld senkrecht zur Strömungsrichtung durchsetzt ist. Wird nun das Messrohr von einem Messfluid mit einer elektrischen Mindestleitfähigkeit durchflossen, werden die in dem leitfähigen Messfluid vorhandenen Ladungsträger, Ionen oder geladene Teilchen, durch das Magnetfeld abgelenkt. An senkrecht zum Magnetfeld und zur Strömungsrichtung angeordneten Messelektroden entsteht durch die Ladungstrennung eine Spannung, die mit einem Messgerät erfasst wird und als Messspannung ausgewertet wird. Der Wert der gemessenen Spannung ist dabei proportional zur Strömungsgeschwindigkeit der mit dem Messfluid bewegten Ladungsträger.

Die elektrisch isolierende Auskleidung besteht im Stand der Technik aus unterschiedlichen elektrisch isolierenden Materialien, beispielsweise aus Kunststoffen oder Keramiken, und wird mittels üblicher Beschichtungsverfahren aufgebracht.

Die EP 1 285 236 B1 offenbart beispielsweise ein magnetisch-induktives Durchflussmessgerät, bei dem die isolierende Innenbeschichtung entweder auf der gesamten Innenfläche des Messrohrs oder alternativ nur partiell im Bereich der Elektroden als Kreisring auf das Messrohr aufgebracht ist. Diese aus dem Stand der Technik bekannte Innenbeschichtung weist jedoch den Nachteil auf, dass die Innenbeschichtung durch das strömende Medium, insbesondere an den Übergangskanten zwischen Messrohroberfläche und InnenbeSchichtung, beschädigt und möglicherweise abgelöst werden kann.

Die Offenlegungsschrift DE 39 17 975 A1 beschreibt ein gattungsgemäßes magnetisch-induktives Durchflussmessgerät, bei dem die isolierende Innenbeschichtung aus zwei Email-Schichten besteht. Dabei weist der Rohrkörper an seinen Enden jeweils eine hervorspringende Umfangsrippe auf, deren Höhe der Dicke der Email-Schichten entspricht. Dadurch ergibt sich ein Messrohr mit konstantem Innenquerschnitt.

Der Offenlegungsschrift DE 197 08 857 A1 lässt sich ein Durchflussmessgerät entnehmen, das eine Messrohrwand aufweist, die teilweise aus einem Metall und teilweise aus Kunststoff besteht. Der Kunststoff ist dabei ohne Vorsprung an der Oberfläche des aus Metall bestehenden Teils der Rohrwand angebracht. Das Messrohr ist zu seinen Enden hin jeweils konisch erweitert und weist in der Mitte über einen gewissen Bereich einen konstanten Innendurchmesser auf.

Ein Messrohr eines magnetisch-induktiven Durchflussmessgerätes, das teilweise mit einer in das Messrohr zurückgesetzten Isolierschicht versehen ist, findet sich als eine Ausgestaltung in der Auslegeschrift DE 1 177 835.

Ausgehend von dem zuvor beschriebenen Stand der Technik liegt der vorliegenden Erfindung folglich die Aufgabe zugrunde, ein magnetisch-induktives Durchflussmessgerät anzugeben, das auch bei rauen Messbedingungen, insbesondere bei Messfluiden mit mitgeführten Partikeln, weniger anfällig gegen eine Beschädigung der Innenbeschichtung durch das Messfluid ist.

Die vorgenannte Aufgabe ist bei dem eingangs beschriebenen magnetisch-induktiven Durchflussmessgerät gemäß der vorliegenden Erfindung dadurch gelöst, dass Übergangsbereiche vom Anschlussquerschnitt auf den Rücksprung vorgesehen sind, die durch eine geneigte Fläche mit geradem oder kurvenförmigem Profil realisiert sind, dass der Rücksprung eine Höhe von etwa 0,1 *µ*m bis 1000 *µ*m aufweist, bevorzugt eine Höhe von 100 *µ*m bis 300 *µ*m, und dass die Innenbeschichtung eine Schichtdicke von etwa 0,1 *µ*m bis 1000 *µ*m, insbesondere 100 *µ*m bis 300 *µ*m aufweist.

Der Einlaufabschnitt und der Auslaufabschnitt weisen in ihrer axialen Erstreckung parallel zur Strömungsrichtung des Messfluids einen Anschlussquerschnitt auf, der vorzugsweise über die jeweilige Erstreckung des Einlaufabschnitts und des Auslaufabschnitts konstant ist, Zur einfachen Orientierung ist mit "Einlaufabschnitt" der stromaufwärts gelegene Bereich und mit "Auslaufabschnitt" der stromabwärts gelegene Bereich des Messrohrs bezeichnet. Der Querschnitt des Einlaufabschnitts entspricht dem Querschnitt des Auslaufabschnitts. Wenn hier von einem Querschnitt die Rede ist, also beispielsweise dem Anschlussquerschnitt, dann ist damit stets derjenige Querschnitt bzw. die Fläche eines Schnitts durch das Messrohr senkrecht zur Strömungsrichtung des Messfluids gemeint.

Zwischen dem Einlaufabschnitt und dem Auslaufabschnitt erstreckt sich der Rücksprung, der durch eine vorzugsweise gleichmäßige Aufweitung des Querschnitts des Messrohrs - ausgehend vom Maß des Anschlussquerschnitts - gebildet ist. Die gleichmäßige Aufweitung des Querschnitts bedeutet, dass der Querschnitt in alle Richtungen um ein gleiches Maß erweitert worden ist, d. h. die Höhe des Rücksprungs, die der jeweiligen Aufweitung entspricht, in jede Richtung gleichmäßig ist. Die Höhe des Rücksprungs, d. h. das Maß der Aufweitung des Anschlussquerschnitts, ist über die gesamte Längserstreckung des Rücksprungs, also parallel zur Strömungsrichtung des Messfluids konstant, wobei ggf. in den Übergangsbereichen vom Anschlussquerschnitt des Einlaufabschnitts bzw. des Auslaufabschnitts auf den Rücksprung ein kurzer Übergangsbereich vorgesehen ist, in dem die Höhe des Rücksprungs kontinuierlich oder sprunghaft - in Abhängigkeit der Blickrichtung - zu- oder abnimmt.

Im Bereich des Rücksprungs ist die Innenbeschichtung auf das Messrohr aufgebracht, wobei ein Aufbringen der Innenbeschichtung auf der gesamten Länge des Rücksprungs - parallel zur Strömungsrichtung des Messfluids - vorgesehen ist. Vorzugsweise ist auch vorgesehen, dass die Innenbeschichtung ausschließlich im Bereich des Rücksprungs aufgebracht ist, so dass die anderen Bereiche des Messrohrs unbeschichtet sind. Die Schichtdicke der Innenbeschichtung ist derart dimensioniert, dass eine ausreichende elektrische Isolierung des Messrohrs von dem Messfluid im Bereich der Innenbeschichtung realisiert ist. Die beiden Elektroden zur Erfassung der Messspannung sind im Bereich des Rücksprungs und damit auch im Bereich der Innenbeschichtung derart an dem Messrohr angeordnet, dass sie senkrecht zu dem von der Magneteinrichtung erzeugten Magnetfeld positioniert sind. Die Elektroden sind dazu vorzugsweise senkrecht zur Strömungsrichtung durch die Messrohrwand hindurchgeführt und außerhalb des Messrohrs kontaktiert.

Die Isolierung der Elektroden von der Messrohrwand und die Abdichtung gegen den Austritt von Messfluid durch die für die in der Messrohrwand vorgesehenen Ausnehmungen erfolgt vorteilhaft dadurch, dass die Elektroden in einer separaten Durchführung in der Messrohrwand befestigt sind. Die Durchführungen bestehen vorzugsweise aus Glas oder einer Keramik und werden zur Montage entweder aus dem Messrohrinnenvolumen nach außen geführt oder von außen an dem Messrohr befestigt bzw. an das Messrohrinnenvolumen herangeführt. Die Elektroden sind vorzugsweise derart in den Durchführungen befestigt, dass sie bündig abschließen.

Das magnetisch-induktive Durchflussmessgerät gemäß der vorliegenden Erfindung ist zur Befestigung zwischen zwei Rohrleitungen eines Rohrleitungssystems vorgesehen. Das Messrohr ist dabei im montierten Zustand in einem nicht näher erläuterten Gehäuse untergebracht bzw. das Gehäuse ist an dem Messrohr befestigt, so dass innerhalb des Gehäuses zusätzlich die Auswerteelektronik und die weiteren notwendigen Bauelemente eines magnetisch-induktiven Durchflussmessgeräts untergebracht sind.

Die Erfindung weist den Vorteil auf, dass die innenliegende Beschichtung geschützt im Bereich des Rücksprungs auf das Messrohr aufgebracht ist, so dass die Innenbeschichtung vor einer Beschädigung durch das strömende Messfluid, insbesondere durch mitgeführte Partikel geschützt angeordnet ist. Als besonders anfällig für Beschädigungen haben sich bei den aus der Praxis bekannten magnetisch-induktiven Durchflussmessgeräten insbesondere die Übergangsbereiche von der Oberfläche des Messrohrs auf die Innenbeschichtung herausgestellt, da diese Übergangsbereiche bzw. Kanten eine Angriffsfläche für schädigende Einflüsse bieten. Die Gestaltung gemäß der Lehre der vorliegenden Erfindung bietet demgegenüber den Vorteil, dass die Innenbeschichtung gegenüber dem Anschlussquerschnitt, also einer Oberfläche des Messrohrs, versenkt befestigt ist, so dass das Risiko einer Beschädigung oder Ablösung der Innenbeschichtung reduziert ist. Die versenkte Innenbeschichtung bietet keine oder nur eine geringe Angriffsfläche, da die Basis der Innenbeschichtung stets hinter dem durch den Rücksprung entstehenden Absatz liegt.

An den Einlaufabschnitt bzw. an den Auslaufabschnitt mit dem Anschlussquerschnitt schließt sich im Montagezustand beispielsweise unmittelbar das Rohrleitungssystem an, dessen Querschnitt dann dem Anschlussquerschnitt entspricht, wobei eine Verbindung vorteilhaft über Flansche oder ein unmittelbares Einschweißen des Messrohrs in die Rohrleitung realisiert ist. Alternativ dazu ist beispielsweise beidseitig ein zwischenliegendes Adapterstück vorgesehen, das den Anschlussquerschnitt des Messrohrs auf den tatsächlichen Querschnitt des Rohrleitungssystems anpasst, wobei dabei auch eine Anschlusseinrichtung, beispielsweise ein Flansch, vorgesehen ist oder ein direktes Einschweißen erfolgt.

Gemäß einer nicht erfindungsgemäßen Ausgestaltung ist vorgesehen, dass der Rücksprung bezüglich seiner Höhe teilweise mit der Innenbeschichtung gefüllt ist, Die Schichtdicke der Innenbeschichtung ist bei dieser Ausgestaltung folglich geringer als die Höhe des Rücksprungs im Bezug auf den Anschlussquerschnitt, also die Maßdifferenz zwischen Anschlussquerschnitt und Boden des Rücksprungs. Durch diese Ausgestaltung hat das strömende Medium in Bezug auf die Innenbeschichtung keine Angriffsfläche, da der im Bereich der Innenbeschichtung resultierende Messrohrquerschnitt geringfügig größer ist als der Anschlussquerschnitt und die Seitenbereiche der Innenbeschichtung vollständig hinter dem durch den Rücksprung gebildeten Absatz verdeckt ist. Zweckmäßigerweise ist die Schichtdicke der Innenbeschichtung ausreichend dick gewählt, um eine elektrische Isolierung zu gewährleisten, wobei die erforderliche Mindestschichtdicke unter anderem von der Messspannung und dem Material der Innenbeschichtung beeinflusst wird.

Gemäß einer weiteren Ausgestaltung des magnetisch-induktiven Durchflussmessgeräts ist vorgesehen, dass der Rücksprung bezüglich seiner Höhe vollständig mit der Innenbeschichtung ausgefüllt ist. Der Rücksprung ist bei dieser Ausgestaltung mindestens vollständig vom Boden des Rücksprungs bis zum Niveau des Anschlussquerschnitts mit der Innenbeschichtung aufgefüllt. In einer nicht erfindungsgemäßen Ausgestaltung ist die Schichtdicke der Innenbeschichtung größer als die Höhe des Rücksprungs, so dass die Innenbeschichtung über den Rücksprung hinausragt und der resultierende Messrohrquerschnitt geringfügig kleiner ist als der - beidseitig des Rücksprungs vorliegende - Anschlussquerschnitt. Diese Ausgestaltung bietet den Vorteil, dass auch große Schichtdicken der Innenbeschichtung realisiert werden können, während der Fertigungsaufwand für den Rücksprung aufgrund der geringen Höhe des Rücksprungs gering gehalten wird. Gleichzeitig ist jedoch durch die versenkte Befestigungsposition der Innenbeschichtung innerhalb des Rücksprungs eine vorteilhafte Befestigung der Innenbeschichtung ermöglicht Die Basis, d. h. der Bodenbereich der Innenbeschichtung, liegt unterhalb des Niveaus des Anschlussquerschnitts, so dass die Innenbeschichtung nicht von dem strömenden Medium untergriffen werden kann und die Wahrscheinlichkeit einer Ablösung deutlich verringert wird. Diese Ausgestaltung eignet sich beispielsweise in besonderem Maße, wenn die Innenbeschichtung aus einer Doppelschicht aus zwei Materialien gebildet wird, wobei dann die Stoßfläche zwischen den beiden Schichten durch den durch den Rücksprung gebildeten Absatz geschützt ist.

Um bei einem Messrohr gemäß dem zuvor beschriebenen Ausgestaltungsbeispiel die Adhäsionsfläche zwischen Messrohr und Innenbeschichtung in einem Randbereich geringfügig zu vergrößern, hat sich als vorteilhaft herausgestellt, wenn die Innenbeschichtung in einem Randbereich geringfügig auf den Einlaufabschnitt und/oder den Auslaufabschnitt erstreckt ist Grundsätzlich sind der Einlaufabschnitt und der Auslaufabschnitt unbeschichtet, wobei lediglich bei diesem Ausführungsbeispiel die Beschichtung geringfügig auf den Einlaufabschnitt bzw. den Auslaufabschnitt erweitert ist. "Geringfügig" bedeutet dabei etwa eine Erstreckung der Innenbeschichtung auf den Einlaufabschnitt bzw. den Auslaufabschnitt um ein Maß, das etwa dem ein- bis fünffachen der Schichtdicke entspricht. Bei einer Schichtdicke von 500 µm ist die Innenbeschichtung folglich beispielsweise sowohl im Einlaufabschnitt als auch im Auslaufabschnitt ungefähr um 1,5 mm auf die Abschnitte erstreckt. Durch diese Ausgestaltung wird eine Innenbeschichtung realisiert, die sehr zuverlässig auf der Oberfläche des Messrohrs haftet.

Gemäß der vorliegenden Erfindung ist vorgesehen, dass die Schichtdicke der Innenbeschichtung der Höhe des Rücksprungs entspricht, so dass der resultierende Querschnitt im Bereich des Rücksprungs dem Anschlussquerschnitt entspricht und ein Messrohr mit nahezu konstantem resultierenden Messrohrquerschnitt ausgebildet ist. Diese Ausgestaltung hat den Vorteil, dass die Innenbeschichtung sowohl vor einer Beschädigung geschützt ist, als auch die Strömung nicht durch die Innenbeschichtung beeinflusst wird. Dadurch, dass der Rücksprung vollständig mit der Innenbeschichtung ausgefüllt ist, entsteht zwischen dem Anschlussquerschnitt und dem resultierenden Messrohrquerschnitt im Bereich der Innenbeschichtung kein Absatz, so dass das Strömungsprofil des Messfluids durch die Innenbeschichtung nicht beeinflusst wird. Die Innenbeschichtung ist somit vollständig innerhalb des Rücksprungs versenkt, so dass ein glatter und einheitlicher Strömungskanal mit einem einheitlichen Messrohrquerschnitt über die gesamte Länge entsteht.

In Abhängigkeit von dem Fertigungsverfahren, mit dem das Messrohr gefertigt wird, aber auch in Abhängigkeit von dem Material des Messrohrs und der Innenbeschichtung sind unterschiedliche Übergangsbereiche zwischen dem Anschlussquerschnitt und dem Rücksprung ausgestaltet. Gemäß der Erfindung sind Übergangsbereiche vom Anschlussquerschnitt auf den Rücksprung vorgesehen, die insbesondere durch eine geneigte Fläche mit geradem oder kurvenförmigem Profil realisiert sind. Durch diese Übergangsbereiche wird der Anschlussquerschnitt kontinuierlich auf den RÜcksprungquerschnitt erweitert bzw. kontinuierlich von dem RÜcksprungquerschnitt auf den Anschlussquerschnitt verjüngt. Der kontinuierliche Übergang kann dabei beispielsweise als gerade geneigte Fläche, also mit einer Schräge mit beliebigem Winkel, realisiert werden. Auch kurvenförmige Verläufe des Übergangs haben sich als vorteilhaft herausgestellt. Nicht erfindungsgemäß ist eine stufenförmige Kontur vorgesehen, wobei der Anschlussquerschnitt mit einer Mehrzahl von Stufen oder mit einer einzigen Stufe auf den Rücksprungquerschnitt erweitert bzw. von diesem verjüngt wird. Die stufenförmigen Übergangsbereiche erfordern allerdings gegenüber den kontinuierlichen Übergangsbereichen einen höheren Fertigungsaufwand.

Je nach Größe des Messgeräts und des Anschlussquerschnitts ist die Höhe des Rücksprungs unterschiedlich dimensioniert. Als besonders vorteilhaft hat sich herausgestellt, wenn der Rücksprung erfindungsgemäß eine Höhe von etwa 0,1 µm bis 1.000 µm aufweist, bevorzugt eine Höhe von 100 µm bis 300 µm. Besonders bevorzugt ist erfindungsgemäß, wenn die Innenbeschichtung eine Schichtdicke von etwa 0,1 µm bis 1.000 µm, insbesondere 100 µm bis 300 µm aufweist. Bei einer Innenbeschichtung, die aus einer Doppelschicht aus zwei unterschiedlichen, überlagerter Materialien hergestellt ist, ist bevorzugt, wenn die untere Schicht, die flächig mit dem Messrohr in Kontakt steht, eine Schichtdicke von etwa 10 *µ*m bis 20 *µ*m und die zweite Deckschicht eine Stärke von etwa 200 *µ*m bis 300 *µ*m aufweist.

Für die Innenbeschichtung sind unterschiedliche Materialien vorgesehen, die eine elektrische Isolierung gewährleisten und ausreichend abrasionsfest sind. Denkbar sind beispielsweise Kunststoffe, Glas oder Keramiken. Gemäß einer bevorzugten Ausgestaltung ist vorgesehen, dass die Innenbeschichtung aus einer Keramik besteht, insbesondere aus Titanoxid oder Aluminiumsilikat. Bei einer Innenbeschichtung aus einer Doppelschicht, bestehend aus Trägerschicht und Deckschicht, besteht vorzugsweise die Trägerschicht aus einer Keramik und die Deckschicht aus einem Kunststoff mit besonders hohem elektrischen Isolationswiderstand, so dass die Trägerschicht die Verbindung zwischen Deckschicht und Materialoberfläche des Messrohrs herstellt. Die Innenbeschichtung wird beispielsweise durch Sputtern, Spritzverfahren oder Tauchen aufgebracht.

Um die Güte der Messergebnisse zu steigern, ist gemäß einer weiteren Ausgestaltung vorgesehen, dass die Innenkontur des Messrohrs ein Vieleck ist, insbesondere ein Rechteck, bevorzugt ein Rechteck mit abgerundeten Ecken. Durch die geraden Seitenflanken der Innenkontur des Messrohrs als Vieleck lässt sich das innerhalb des Messrohrs strömende Messfluid vorteilhaft gleichmäßig mit einem von außen aufgebrachten Magnetfeld durchsetzen und die Messspannung in den Seitenbereichen exakt orthogonal zum Magnetfeld abgreifen. Für den Fall, dass das Rohrleitungssystem keinen dem Messrohrquerschnitt entsprechenden Querschnitt, insbesondere rechteckigen Querschnitt, aufweist, erfolgt am Einlaufabschnitt bzw. am Auslaufabschnitt eine Adaption vom Messrohrquerschnitt bzw. Anschlussquerschnitt auf den Querschnitt des Rohrleitungssystems.

Bei vollständig beschichteten Messrohren sind häufig Referenzelektroden vorgesehen, die zur Bestimmung des Potentialunterschieds zwischen dem Potential des Rohrleitungssystems und dem Potential des Messrohrs dienen. Gemäß einer bevorzugten Ausgestaltung des magnetisch-induktiven Durchflussmessgeräts ist vorgesehen, dass das Messrohr im unbeschichteten Einlaufabschnitt und/oder im unbeschichteten Auslaufabschnitt als Referenzelektrode kontaktiert ist. Die unbeschichteten und elektrisch leitfähigen Oberflächen im Einlaufabschnitt und im Auslaufabschnitt sind dabei derart mit der Auswertelektronik des magnetisch-induktiven Durchflussmessgeräts kontaktiert, dass eine Messung des Potentials des Messfluids bzw. der Wand des Messrohrs erfolgen kann, wobei das Auswerteergebnis zur Bestimmung und/oder Korrektur der Messwerte der Elektroden herangezogen wird. Der Einlaufbereich und der Auslaufbereich sind grundsätzlich unbeschichtet, jedoch lediglich bei einer vorangehend beschriebenen Ausgestaltungen des magnetisch-induktiven Durchflussmessgeräts geringfügig, d. h. in einem Bereich von jeweils etwa 0,5 bis 2 mm mit der Innenbeschichtung überzogen.

Die Elektroden zur Messung der durch das Magnetfeld und das strömende Messfluid hervorgerufenen Messspannung sind vorzugsweise senkrecht durch die Wand des Messrohrs hindurchgeführt und müssen gegen das Messrohr isoliert werden. Gemäß einer vorteilhaften Ausgestaltung ist deshalb vorgesehen, dass die Elektroden in einer Durchführung aus Glas oder Keramik in der Messrohrwand angeordnet sind. Vorzugsweise werden dazu die Elektroden in eine Öffnung in der Messrohrwand positioniert und der zwischen Elektrode und Messrohrwand entstehende Hohlraum mit einem flüssigen Glas oder einer flüssigen Keramik ausgegossen, so dass die Elektrode durch die Durchführung gehalten und gleichzeitig in Bezug auf das Messrohr elektrisch isoliert ist. Alternativ ist die Durchführung ein vorgefertigtes Bauteil, das zusammen mit der Elektrode in der Messrohrwand angebracht wird.

Im Einzelnen gibt es nun eine Vielzahl von Möglichkeiten, das erfindungsgemäße magnetisch-induktive Durchflussmessgerät auszugestalten und weiterzubilden. Dazu wird verwiesen sowohl auf die dem Patentanspruch 1 nach geordneten Patentansprüche als auch auf die nachfolgende Beschreibung von bevorzugten Ausführungsbeispielen in Verbindung mit der Zeichnung. In der Zeichnung zeigen:
- Fig. 1: ein Ausführungsbeispiel eines Messrohrs für ein magnetischinduktives Durchflussmessgerät mit rechteckigem Messrohrquerschnitt,
- Fig. 2: einen Abschnitt eines Ausführungsbeispiels eines Messrohrs für ein magnetisch-induktives Durchflussmessgerät in geschnittener Seitenansicht,
- Fig. 3: ein Ausführungsbeispiel eines Messrohrs für ein magnetischinduktives Durchflussmessgerät in Seitenansicht in Richtung des Strömungskanals,
- Fig. 4: ein Abschnitt eines Ausführungsbeispiels eines Messrohrs für ein magnetisch-induktives Durchflussmessgerät mit hervorstehender Innenbeschichtung,
- Fig. 5: Ausführungsbeispiele von verschiedenen Schichtdicken von Innenbeschichtungen und unterschiedlichen Übergängen zwischen dem Anschlussquerschnitt und dem Rücksprung, und
- Fig. 6: ein Ausführungsbeispiel eines Messrohrs für ein magnetischinduktives Durchflussmessgerät mit kreisrundem Messrohrquerschnitt.

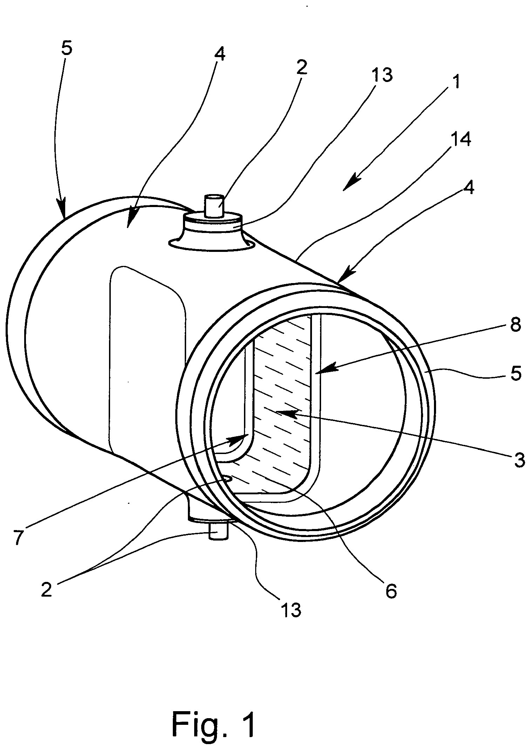

Fig. 1 zeigt ein Ausführungsbeispiel eines Messrohrs 1 für ein magnetisch-induktives Durchflussmessgerät. Auf gegenüberliegenden Seiten des Messrohrs 1 ist jeweils eine Elektrode 2 angeordnet, wobei die Elektroden 2 senkrecht zur Strömungsrichtung eines Messfluids und senkrecht zu einem durch eine - nicht dargestellte - Magneteinrichtung erzeugten Magnetfeld angeordnet sind. Der Messrohrquerschnitt 3, also die Innenkontur des Messrohrs 1 ist im Wesentlichen rechteckig ausgestaltet, wobei die Ecken abgerundet sind. Für den Anschluss des Messrohrs 1 an ein - nicht dargestelltes - Rohrleitungssystem sind beidseitig des Messrohrquerschnitts 3 Adapterstücke 4 vorgesehen, die den Querschnitt vom Messrohrquerschnitt 3 auf einen Rohrsystemquerschnitt - in diesem Fall kreisrund - anpassen. Die Adapterstücke 4 weisen in ihren äußeren Randbereichen jeweils eine Fase 5 auf, die als Schweißnahtvorbereitung dient, so dass das Messrohr 1 unmittelbar an die nicht dargestellten und ebenfalls mit einer Fase versehenen Rohrleitungen des Rohrleitungssystems angeschweißt werden kann. Im Montagezustand ist das Messrohr 1 im Vergleich zu der in Fig. 1 dargestellten Ausrichtung um etwa 90° gedreht, so dass sich die Elektroden 2 auf einer Horizontalen gegenüberliegen.

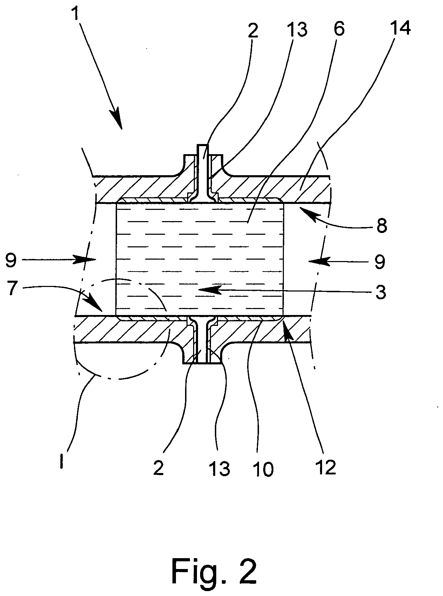

Auf der Innenseite des Messrohrs ist eine isolierende Innenbeschichtung 6 aufgebracht. In Strömungsrichtung stromaufwärts der Innenbeschichtung 6 weist das Messrohr 1 einen Einlaufabschnitt 7 und in Strömungsrichtung stromabwärts einen Auslaufabschnitt 8 auf, wobei der Einlaufabschnitt 7 und der Auslaufabschnitt 8 einen gemeinsamen, in Fig. 2 dargestellten Anschlussquerschnitt 9 aufweisen. Zwischen dem Einlaufabschnitt 7 und dem Auslaufabschnitt 8 ist das Messrohr 1 derart aufgeweitet, dass gegenüber dem Anschlussquerschnitt 9 ein Rücksprung 10, also ein Bereich mit gegenüber dem Anschlussquerschnitt erweiterten Querschnitt ausgebildet ist. Der Rücksprung 10 ist gemäß Fig. 1 vollständig mit dem Material der Innenbeschichtung 6 gefüllt, so dass die Schichtdicke der Innenbeschichtung 6 der Höhe des Rücksprungs 10 entspricht und der resultierende Messrohrquerschnitt 3 im Bereich des Rücksprungs 10 dem Anschlussquerschnitt 9 entspricht. Dadurch entsteht zwischen dem Eintrittsabschnitt und der Innenbeschichtung und dem Austrittsabschnitt und der Innenbeschichtung kein Absatz, so dass ein strömendes Messfluid durch die Innenbeschichtung unbeeinflusst bleibt.

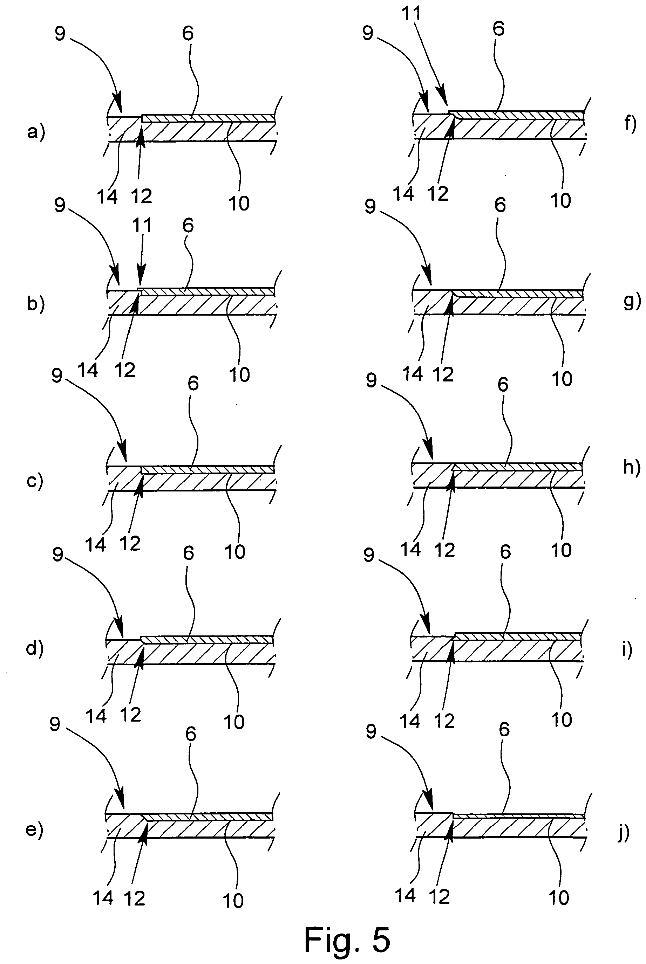

Fig. 2 zeigt ein Ausführungsbeispiel eines Abschnitts eines Messrohrs 1 für ein magnetisch-induktives Durchflussmessgerät in geschnittener Seitenansicht. Die Innenbeschichtung 6 ist im Rücksprung 10 angeordnet, wobei die Schichtdicke der Innenbeschichtung 6 der exakt Höhe des Rücksprungs 10 entspricht, so dass ein gleichmäßiger Übergang zum Anschlussquerschnitt 9 realisiert ist. Alternativ zu einem gleichmäßig Übergang zwischen Innenbeschichtung 6 und Einlaufabschnitt 7 bzw. Auslaufabschnitt 8 kann die Innenbeschichtung gemäß den Fig. 5b und f in einem Randbereich 11 geringfügig, d. h. maximal um wenige Millimeter, auf die Oberfläche des Einlaufabschnitts 7 und/oder des Auslaufabschnitts 8 erstreckt sein, wobei die Oberflächen des Einlaufabschnitts 7 und des Auslaufabschnitts grundsätzlich unbeschichtet sind und damit in direkten Kontakt mit dem Messfluid stehen. Der Übergangsbereich 12 zwischen dem Rücksprung 10 und dem beidseitig vorliegenden Anschlussquerschnitt erfolgt gemäß Fig. 2 mit einem kurvenförmigen Verlauf des Übergangsbereichs 12.

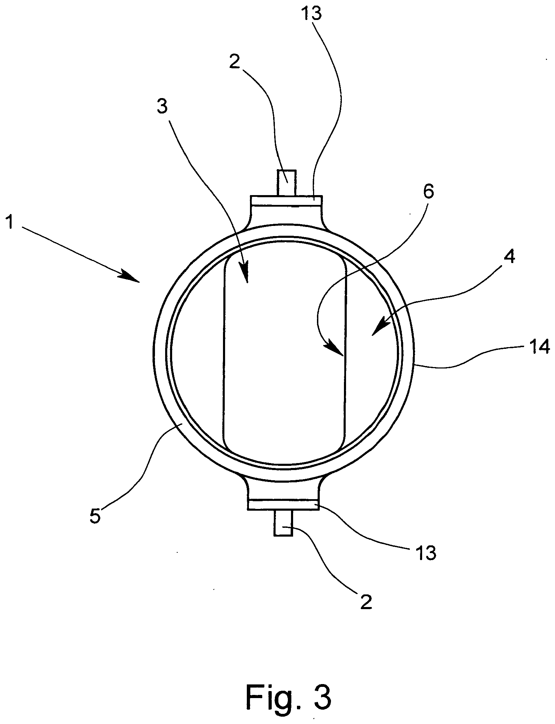

Fig. 3 zeigt das Messrohr gemäß Fig. 1 in einer Seitenansicht in Richtung des Strömungskanals. Der Messrohrquerschnitt 3 ist im Wesentlichen rechteckig und weist abgerundete Ecken auf. Die Fase 5 dient - wie bereits zuvor beschrieben - als Schweißnahtvorbereitung zum Befestigen des Messrohrs 1 an einem Rohrleitungssystem. Die Elektroden 2 sind mit einer Durchführung 13 aus Glas senkrecht durch die Messrohrwand 14 hindurchgeführt, so dass die Elektroden 2 senkrecht zu einem durch eine - nicht dargestellte - Magneteinrichtung erzeugten Magnetfeld angeordnet sind. Die Durchführung 13 aus Glas isoliert die Elektroden 2 von der Messrohrwand 14.

Während gemäß der Fig. 1 die mit dem Strömungskanal in Kontakt stehende Oberfläche der Durchführung 13 bis an die Elektroden 2 heran mit der Innenbeschichtung überzogen ist, ist in dem Ausführungsbeispiel gemäß Fig. 2 die Oberfläche der Durchführung 13 unbeschichtet, so dass die Innenbeschichtung lediglich bis an die Durchführung 13 heran ausgeführt ist und die Elektrode in Strömungskanal von einem schmalen durch die Durchführung gebildeten Kreisring umgeben ist. Selbstverständlich ist jede der beschriebenen Ausgestaltungen für eine Durchführung 13 für jedes hier beschriebene Messrohr denkbar.

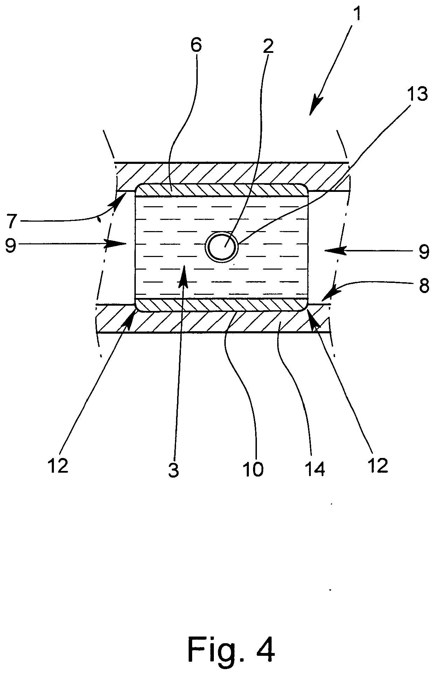

Fig. 4 zeigt einen Abschnitt eines Messrohrs 1 für ein magnetisch-induktives Durchflussmessgerät, bei dem die Innenbeschichtung 6 im Bereich des Rücksprungs 10 aufgebracht ist und die Schichtdicke der Innenbeschichtung 6 größer ist als die Höhe des Rücksprungs 10. Die Innenbeschichtung 10 verursacht somit einen resultierenden Messrohrquerschnitt, der geringfügig kleiner ist als der Anschlussquerschnitt 9. Der Übergangsbereich 12 weist bei diesem Ausführungsbeispiel eine kurvenförmige Kontur auf. Die Elektrode 2 ist mit einer Durchführung 13 durch die Messrohrwand 14 hindurchgeführt. Die Durchführung 13 ist im Bereich des Strömungskanals unbeschichtet.

Fig. 5 a) bis j) zeigen eine Mehrzahl von unterschiedlichen Übergangsbereichen 12 zwischen dem Anschlussquerschnitt 9 und dem Rücksprung 10. Dargestellt ist jeweils in kurzer Abschnitt der Messrohrwand 14, der in etwa dem Bereich entspricht, der in Fig. 1 mit dem Kreis I gekennzeichnet ist. Die Schichtdicke der Innenbeschichtung 10 ist grundsätzlich über die Längserstreckung des Rücksprungs 10 parallel zur Strömungsrichtung des Messfluids konstant, wobei die Übergangsbereiche 12 je nach Ausgestaltung eine Ausnahme darstellen. In den Fig. 5 a), b), c), j) ist der Übergangsbereich 12 zwischen Anschlussquerschnitt 9 und Rücksprung 10 stufenartig , d.h. nicht erfindungsgemäß, ausgestaltet. Die Fig. 5 d), e), h), i) zeigen einen kontinuierlichen Übergang zwischen Anschlussquerschnitt 9 und Rücksprung 10 mittels einer schrägen Fläche, während die Fig. 5 f) und g) einen kontinuierlichen Übergang zwischen Anschlussquerschnitt 9 und Rücksprung 10 mit einer kurvenförmigen Kontur zeigen. In den Fig. 5 a), b), d), f), i) ist die Schichtdicke der Innenbeschichtung 6 größer als die Höhe des Rücksprungs 10, d.h. nicht erfindungsgemäß, so dass die Innenbeschichtung 6 über die Höhe des Rücksprungs 10 hinausragt und der resultierende Messrohrquerschnitt 3 im Bereich der Innenbeschichtung 6 etwas geringer ist als der Anschlussquerschnitt 9.

In Fig. 5 c), e), g), h) entspricht die Schichtdicke der Innenbeschichtung 6 genau der Höhe des Rücksprungs 10, so dass ein ebener Übergangsbereich 12 zwischen Anschlussquerschnitt 9 und dem resultierenden Messrohrquerschnitt 3 im Bereich der Innenbeschichtung 6 erfolgt. Fig. 5 j) zeigt ein Ausführungsbeispiel, bei dem die Schichtdicke der Innenbeschichtung 6 geringer ist als die Höhe des Rücksprungs 10, d.h. nicht erfindungsgemäß, so dass der resultierende Messrohrquerschnitt 3 im Bereich der Innenbeschichtung 3 größer als der Anschlussquerschnitt 9 ist. Die in den Fig. 5 h) und i) dargestellten Übergangsbereiche 12 verursachen einen erhöhten Fertigungsaufwand, zeichnen sich allerdings durch eine sehr widerstandsfähige Befestigung der Innenbeschichtung aus. Selbstverständlich sind auch weitere, nicht dargestellte Kombinationen von Übergangsbereichen 12 und Innenbeschichtungen 6 mit verschiedenen Schichtdicken möglich, beispielsweise auch eine nicht erfindungsgemäße Innenbeschichtung 6 mit geringerer Höhe als der Rücksprung 10 mit einem Übergangsbereich 12 mit kurvenförmiger Kontur.

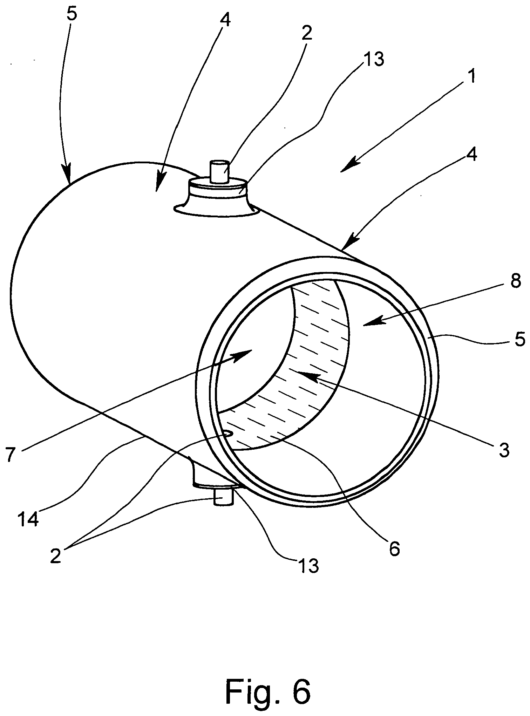

Fig. 6 zeigt ein Ausführungsbeispiel eines Messrohrs 1 für ein magnetisch-induktives Durchflussmessgerät, das über die gesamte Länge einen einheitlichen, konstanten Querschnitt aufweist. Der einheitliche Messrohrquerschnitt 3 wird dadurch realisiert, dass die Innenbeschichtung 6 derart im Bereich des Rücksprungs 10 aufgebracht ist, dass der resultierende Messrohrquerschnitt 3 im Bereich der Innenbeschichtung 6 exakt dem Anschlussquerschnitt 9 des Einlaufabschnitts 7 und des Auslaufabschnitts 8 entspricht, so dass kein Absatz entsteht. Der Querschnitt des Messrohrs, folglich also einheitlich über die gesamte Länge der Anschlussquerschnitt, entspricht im vorliegenden Fall auch dem Querschnitt der Rohrleitungen des Rohrleitungssystems in das das magnetisch-induktive Durchflussmessgerät eingebaut werden soll, so dass durch das Vorhandensein des Messgeräts, insbesondere durch die Ausgestaltung des Messgeräts, keine Beeinflussung der Strömung innerhalb des Rohrsystems erfolgt. Das Messrohr 1 weist an seinen Enden Fasen 5 auf, die als Schweißnahtvorbereitung zum Einschweißen des Durchflussmessgeräts in das Rohrleitungssystem dienen.

Die Innenbeschichtung 6 hat bei diesem Ausführungsbeispiel gemäß Fig. 6 eine Schichtdicke von 450 µm. Die Elektroden 2 sind senkrecht in der Messrohrwand 14 im Bereich der Innenbeschichtung 6 angebracht, wobei die Durchführungen 13 im Bereich des Strömungskanals entsprechend dem Ausfiihrungsbeispiel in Fig. 2 unbeschichtet sind. Im - nicht dargestellten - Montagezustand ist das Messrohr 1 in ein Gehäuse eingebaut, das neben dem Messrohr 1 zusätzlich wenigstens eine Auswerteelektronik und eine Magneteinrichtung zur Erzeugung des Magnetfelds umfasst. Das Ausführungsbeispiel verfügt über einen kreisrunden Querschnitt, so dass der Innendurchmesser über die gesamte Länge des Messrohrs 1 im vorliegenden Fall konstant ist. Die Innenbeschichtung 6 besteht aus einer Keramik.

## Patentansprüche

1. Magnetisch-induktives Durchflussmessgerät mit einem Messrohr (1), mit mindestens einer Magneteinrichtung und mindestens zwei Elektroden (2), wobei das Messrohr (1) einen Messrohrquerschnitt (3) aufweist, aus einem Metall besteht und eine elektrisch isolierende Innenbeschichtung (6) aufweist, wobei das Messrohr (1) einen Einlaufabschnitt (7) und einen Auslaufabschnitt (8) aufweist, wobei der Einlaufabschnitt (7) und der Auslaufabschnitt (8) des Messrohrs (1) einen Anschlussquerschnitt (9) aufweisen, wobei das Messrohr (1) zwischen dem Einlaufabschnitt (7) und dem Auslaufabschnitt (8) aufgeweitet ist, so dass ein Rücksprung (10) gegenüber dem Anschlussquerschnitt (9) ausgebildet ist, wobei die Elektroden (2) im Rücksprung (10) angeordnet sind, wobei die Innenbeschichtung (6) im Rücksprung (10) auf das Messrohr (1) aufgebracht ist, und wobei die Schichtdicke der Innenbeschichtung (6) der Höhe des Rücksprungs (10) entspricht, so dass der resultierende Querschnitt im Bereich des Rücksprungs (10) dem Anschlussquerschnitt (9) entspricht und ein Messrohr (1) mit nahezu konstantem resultierenden Messrohrquerschnitt (3) ausgebildet ist, wobei der Rücksprung (10) eine Höhe von etwa 0,1 µm bis 1000 µm aufweist, bevorzugt eine Höhe von 100 µm bis 300 µm, und wobei die Innenbeschichtung (6) eine Schichtdicke von etwa 0,1 µm bis 1000 µm, insbesondere 100 µm bis 300 µm aufweist, **dadurch gekennzeichnet,**
**dass** Übergangsbereiche (12) vom Anschlussquerschnitt (9) auf den Rücksprung (10) vorgesehen sind, die durch eine geneigte Fläche mit geradem oder kurvenförmigem Profil realisiert sind.

2. Magnetisch-induktives Durchflussmessgerät nach Anspruch 1, **dadurch gekennzeichnet, dass** die Innenbeschichtung (6) aus einer Keramik besteht, insbesondere aus Titanoxid oder Aluminiumsilikat.

3. Magnetisch-induktives Durchflussmessgerät nach Anspruch 1 oder 2, **dadurch gekennzeichnet, dass** die Innenkontur des Messrohrs (1) ein Vieleck ist, insbesondere ein Rechteck, bevorzugt ein Rechteck mit abgerundeten Ecken.

4. Magnetisch-induktives Durchflussmessgerät nach einem der Ansprüche 1 bis 3, **dadurch gekennzeichnet, dass** das Messrohr (1) im unbeschichteten Einlaufabschnitt (7) und/oder im unbeschichteten Auslaufabschnitt (8) als Referenzelektrode kontaktiert ist.

5. Magnetisch-induktives Durchflussmessgerät nach einem der Ansprüche 1 bis 4, **dadurch gekennzeichnet, dass** die Elektroden (2) in einer Durchführung (13) aus Glas oder Keramik in der Messrohrwand (14) angeordnet sind.

6. Magnetisch-induktives Durchflussmessgerät nach Anspruch 5, **dadurch gekennzeichnet, dass** die Oberfläche der Durchführung (13) unbeschichtet von der Innenbeschichtung (6) ist, so dass die Elektroden (2) von einem durch die Durchführung (13) gebildeten Kreisring umgeben sind.

## Claims

1. Magnetic-inductive flowmeter with a measuring tube (1) having at least one magnetic device and at least two electrodes (2), wherein the measuring tube (1) has a measuring tube cross-section (3), consists of a metal and has an electrically insulating inner coating (6), wherein the measuring tube (1) has an inlet section (7) and an outlet section (8), wherein the inlet section (7) and the outlet section (8) of the measuring tube (1) have a connection cross-section (9), wherein the measuring tube (1) is widened between the inlet section (7) and the outlet section (8), so that a recess (10) is formed compared to the connection cross section (9), wherein the electrodes (2) are arranged in the recess (10), wherein the inner coating (6) is applied to the measuring tube (1) in the recess (10), and wherein the layer thickness of the inner coating (6) corresponds to the height of the recess (10), so that the resulting cross-section in the region of the recess (10) corresponds to the connection cross-section (9) and a measuring tube (1) is formed resulting in a measuring tube cross-section (3) that is nearly constant, wherein the recess (10) has a height of approximately 0.1 µm to 1000 µm, preferably a height of 100 µm to 300 µm, and in that the inner coating (6) has a layer thickness of approximately 0.1 µm to 1000 µm, in particular 100 µm to 300 µm. **characterized in**
**that** transition regions (12) from the connection cross section (9) to the recess (10) are provided, which are implemented by an inclined surface with a straight or curved profile.

2. Magnetic-inductive flowmeter according to claim 1, **characterized in that** the inner coating (6) consists of a ceramic, in particular of titanium oxide or aluminum silicate.

3. Magnetic-inductive flowmeter according to claim 1 or 2, **characterized in that** the inner contour of the measuring tube (1) is a polygon, in particular a rectangle, preferably a rectangle with rounded corners.

4. Magnetic-inductive flowmeter according to any one of claims 1 to 3, **characterized in that** the measuring tube (1) is contacted in the uncoated inlet section (7) and/or in the uncoated outlet section (8) as a reference electrode.

5. Magnetic-inductive flowmeter according to any one of claims 1 to 4, **characterized in that** the electrodes (2) are arranged in a feedthrough (13) made of glass or ceramic in the measuring tube wall (14).

6. Magnetic-inductive flowmeter according to claim 5, **characterized in that** the surface of the feedthrough (13) is uncoated by the inner coating (6), so that the electrodes (2) are surrounded by a circular ring formed by the feedthrough (13).

## Revendications

1. Débitmètre magnéto-inductif comprenant un tube de mesure (1), au moins un dispositif magnétique et au moins deux électrodes (2), le tube de mesure (1) ayant une section transversale de tube de mesure (3), étant formé d'un métal et comportant un revêtement intérieur (6) électriquement isolant, le tube de mesure (1) comportant une portion d'entrée (7) et une portion de sortie (8), la portion d'entrée (7) et la portion de sortie (8) du tube de mesure (1) ayant une section transversale de raccordement (9), le tube de mesure (1) étant élargi entre la portion d'entrée (7) et la portion de sortie (8) de façon à former un retrait (10) par rapport à la section transversale de raccordement (9), les électrodes (2) étant disposées dans le retrait (10), le revêtement intérieur (6) étant appliqué sur le tube de mesure (1) dans le retrait (10), et l'épaisseur de couche du revêtement intérieur (6) correspondant à la hauteur du retrait (10) de sorte que la section transversale résultante dans la région du retrait (10) corresponde à la section transversale de raccordement (9) et qu'un tube de mesure (1) soit formé avec une section transversale de tube de mesure résultante (3) presque constante, le retrait (10) ayant une hauteur d'environ 0,1 µm à 1000 µm, de préférence une hauteur de 100 µm à 300 µm, et le revêtement intérieur (6) ayant une épaisseur de couche d'environ 0,1 µm à 1000 µm, en particulier de 100 µm à 300 µm,
**caractérisé en ce que**
des zones de transition (12) allant de la section transversale de raccordement (9) au retrait (10) sont prévues qui sont réalisées par une surface inclinée ayant un profil droit ou incurvé.

2. Débitmètre magnéto-inductif selon la revendication 1, **caractérisé en ce que** le revêtement intérieur (6) est formé d'une céramique, notamment d'oxyde de titane ou de silicate d'aluminium.

3. Débitmètre magnéto-inductif selon la revendication 1 ou 2, **caractérisé en ce que** le contour intérieur du tube de mesure (1) est un polygone, notamment un rectangle, de préférence un rectangle à coins arrondis.

4. Débitmètre magnéto-inductif selon l'une des revendications 1 à 3, **caractérisé en ce que** le tube de mesure (1) dans la portion d'entrée non revêtue (7) et/ou dans la section de sortie non revêtue (8) est en contact en tant qu'électrode de référence.

5. Débitmètre magnéto-inductif selon l'une des revendications 1 à 4, **caractérisé en ce que** les électrodes (2) sont disposées dans un passage (13) en verre ou en céramique ménagé dans la paroi de tube de mesure (14).

6. Débitmètre magnéto-inductif selon la revendication 5, **caractérisé en ce que** la surface du passage (13) est non revêtue du revêtement intérieur (6) de sorte que les électrodes (2) sont entourées par un anneau circulaire formé par le passage (13).
